# EUROPEAN PATENT APPLICATION

(11) **EP 2 634 394 A2**
(43) Date of publication of application: **04.09.2013**
(21) Application number: 13155860.3
(22) Date of filing: 19.02.2013
(51) Int. Cl.: F02C 7/22, F02C 7/26, F02C 9/26

(54) **Combustion system for a gas turbine engine and method for directing fuel flow within the same**

(30) Priority: 28.02.2012 US 201213406780
(71) Applicant: Honeywell International Inc., Morristown, NJ 07962-2245 (US)
(72) Inventor: Dudebout, Rodolphe, Morristown, NJ 07962-2245 (US); Bohman, Richard, Morristown, NJ 07962-2245 (US); Striker, Donald R., Morristown, NJ 07962-2245 (US); Mcpherson, Michael, Morristown, NJ 07962-2245 (US); Greenma, Matt, Morristown, NJ 07962-2245 (US)
(74) Representative: Houghton, Mark Phillip

(57) **Abstract**

Disclosed is a combustion system for a gas turbine engine, which includes a combustor and a plurality of fuel injector nozzles within the combustor. The plurality of fuel injector nozzles include at least one start nozzle and at least of run nozzle, wherein each of the plurality of fuel injector nozzles is a single-circuit fuel injector nozzle. The combustion system further includes a fuel flow directing system to selectively deliver fuel flow to each of the at least one start nozzle and at least one run nozzle, wherein the fuel flow directing system is configured to deliver preferential flow of fuel to the at least one start nozzle during an engine start-up procedure and is further configured to deliver an equalized flow both of the at least one start nozzle and the at least one run nozzle as a total engine fuel flow is near or above an idle setting.

## Description

### TECHNICAL FIELD

The present invention generally relates to gas turbine engine fuel combustion and combustion control systems, and more particularly relates to a combustor for a gas turbine engine and methods for directing fuel flow within the combustor.

### BACKGROUND

The starting of a gas turbine engine is a complex process and generally includes two stages. In the first stage, the gas turbine engine is rotated by a torque provided by an external source, for example, by a starter. When a predetermined compressor pressure or speed is reached, fuel flow is injected at a controlled rate into the combustor to mix with the air flow and the mixture is exposed to an ignition source and eventually ignition occurs. In the second stage the fuel flow is continuously injected into the combustor, enabling the local ignition to propagate and spread in order to form stable combustion in the combustor. Fuel flow during this stage must be high enough so as to ensure light-off of all fuel injectors in the combustor and adequate combustion efficiency, but not so high as to result in "hot streaks," or local high temperature areas that may result in thermal damage to the engine. During the second stage, the engine speed is accelerated by increasing the fuel flow injection until the engine operates under a self-sustained, steady-state speed.

Subsequent to the starting process, the gas turbine engine is typically maintained at idle power for a period of time. At idle power, enough fuel must flow to the engine to maintain a self-sustained speed, and to maintain temperature uniformity within the engine. As fuel consumption during idling operations necessarily results in carbon and nitrogen emissions, it is desirable to reduce fuel flow, and consequently emissions, as much as possible.

It is known in the art to provide a gas turbine engine combustor having a plurality of circumferentially positioned fuel injectors, wherein a minority of the plurality of fuel injectors are dual-circuit, or "pilot" nozzles, and wherein a majority are single-circuit, air-assisted nozzles. It is also well known in the art to provide a gas turbine engine combustor having a plurality of dual-circuit nozzles. However, dual-circuit nozzles are more expensive to produce and maintain than single-circuit nozzles, and as such are less desirable.

In view of the foregoing, there is a need for systems and methods for fuel flow delivery in a gas turbine engine that use only single-circuit fuel injectors. There is also a need for such systems and methods that ensure sufficient fuel flow during start-up procedures to initiate ignition, promote light-around without causing hot streaks. Still further, there is a need for such systems and method that reduce fuel consumption and emissions at idling and higher power conditions. The present invention addresses one or more of these needs.

### BRIEF SUMMARY

Disclosed in an exemplary embodiment is a combustion system for a gas turbine engine, which includes a combustor and a plurality of fuel injector nozzles within the combustor. The plurality of fuel injector nozzles include at least one start nozzle and at least of run nozzle, wherein each of the plurality of fuel injector nozzles is a single-circuit fuel injector nozzle. The combustion system further includes a fuel flow directing system to selectively deliver fuel flow to each of the at least one start nozzle and at least one run nozzle, wherein the fuel flow directing system is configured to deliver preferential flow of fuel to the at least one start nozzle during an engine start-up procedure and is further configured to deliver an equalized flow both of the at least one start nozzle and the at least one run nozzle as a total engine fuel flow is near or above an idle setting.

Disclosed in another exemplary embodiment is a combustion system for a gas turbine engine, which includes a combustor and a plurality of fuel injector nozzles within the combustor. The plurality of fuel injector nozzles include at least one start nozzle, at least of run nozzle, and at least one staged nozzle, wherein each of the plurality of fuel injector nozzles is a single-circuit fuel injector nozzle. The combustion system further includes a fuel flow directing system to selectively deliver flow to each of the at least one start nozzle, the at least one run nozzle, and the at least one staged nozzle, wherein the fuel flow directing system is configured to deliver preferential flow of fuel to the at least one start nozzle during an engine start-up procedure and is further configured to deliver an equalized flow to all of the at least one start nozzle, the at least one run nozzle, and the at least one staged nozzle as a total engine fuel flow is near or above an idle setting.

Disclosed in yet another exemplary embodiment is a method for directing fuel flow within a combustor of a gas turbine engine, the method including, within a first range of total fuel flow to the combustor, directing a preferential amount of fuel flow to one or more single-circuit start fuel injector nozzles as the total fuel flow increases within the first range. The method further includes directing a remainder of fuel flow to one or more single-circuit run fuel injector nozzles as the total fuel flow increases within the first range.

Furthermore, other desirable features and characteristics of the combustor and method for directing the flow of fuel within the combustor will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:

FIG. 1 depicts a functional block diagram of one example embodiment of at least a portion of a gas turbine engine fuel flow control system;

FIGs. 2a and 2b depict charts illustrating the flow of fuel to fuel injector nozzles in the combustor of the gas turbine engine, in alternate embodiments;

FIG. 3 depicts an exemplary combustor configuration in accordance with one embodiment; and

FIGs. 4A, 4B, 4C, 4D, and 4E depict alternative exemplary combustor configurations.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

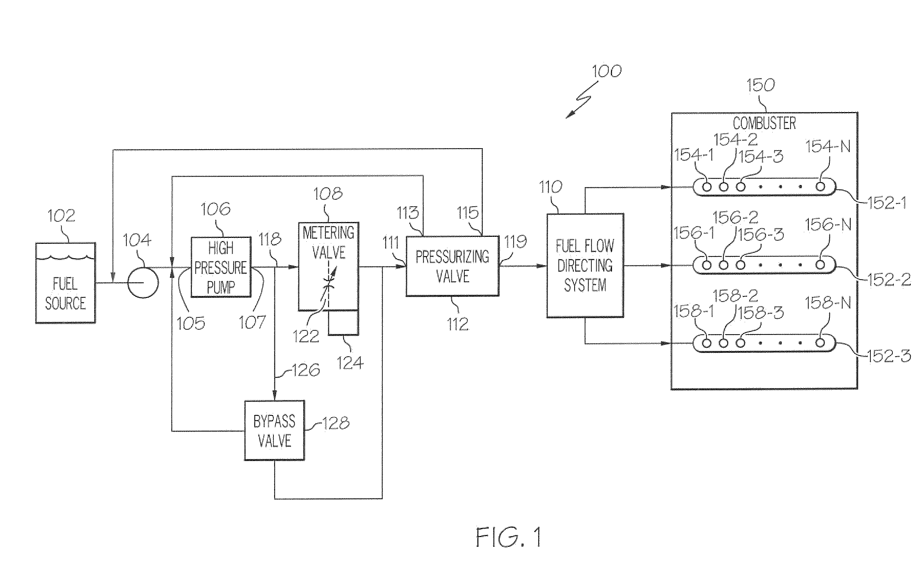

FIG. 1 depicts a block diagram of an exemplary embodiment of a gas turbine engine fuel flow control system 100. The depicted system 100 includes a fuel source 102, one or more pumps 104, 106, a metering valve 108, a pressurizing valve 112, and a fuel flow directing system 110. The fuel source 102, which is preferably implemented as one or more tanks, stores fuel that is to be supplied to one or more fuel loads, such as a combustor 150.

The one or more pumps 104, 106 are positioned in flow-series in a supply line 118 and draw fuel from the fuel source 102. In the depicted embodiment, a boost pump 104, such as a relatively low horsepower centrifugal pump, and a high-pressure fuel metering pump 106 are used. The boost pump 104 draws fuel directly from the fuel source 102 and provides sufficient suction head for the high pressure pump 106. The boost pump 104 may be either mechanically driven by the engine, or electrically driven by a non-illustrated motor. Although not depicted, it will be appreciated that the system 100 may additionally include a low pressure pump within the fuel tank(s) 102 to supply fuel to the boost pump 104. Moreover, the boost pump 104 may, in some embodiments, not be included.

The high pressure pump 106 includes a pump inlet 105 and a pump outlet 107, and is coupled to be controllably energized from, for example, a power source (not-illustrated). The high pressure pump 106 is configured, upon being energized, to draw fuel into the pump inlet 105 and the discharge fuel, at a relatively high pump discharge pressure, out the pump outlet 107. The high pressure pump 106 may be variously configured and implemented. For example, the high pressure pump 106 may be a positive displacement pump or a centrifugal pump.

The metering valve 108 is positioned in flow-series in the supply line 118 downstream of the high pressure pump 106. The metering valve 108 includes a variable area flow orifice 122 through which a portion of the fuel in the supply line 118 flows. A metering valve control device 124 may be used to adjust the position of the metering valve 108, and thus the area of the variable area flow orifice 122. It will be appreciated that the metering valve 108 and the control device 124 may be implemented using any one of numerous types of components. For example, the metering valve 108 could be an electrically operated valve, a hydraulically-operated valve, or a pneumatic valve. Moreover, the control device 124 may be implemented as an electro-hydraulic servo valve (EHSV), an electric motor, or an independent controller, just to name a few. In any case, fuel flow rate to the combustor 150 is, under normal circumstances, controlled by adjusting the position of the metering valve 108, and thus the area of the first variable area flow orifice 122.

As FIG. 1 additionally depicts, the system 100 may also include a bypass flow line 126. The bypass flow line 126, if included, is connected to the supply line 118 between the high pressure pump 106 and the metering valve 108, and selectively bypasses a portion of the fuel in the supply line 118 back to the inlet of the high pressure pump 106. To do so, the bypass flow line 126 includes a bypass valve 128 that is positioned in response to pressure upstream and downstream pressure of the metering valve 108, to selectively divert fuel flow in the supply line 118 away from the metering valve 108, and thus the combustor 150, back through the bypass flow line 126 to the inlet 105 of the high pressure pump 106, to maintain a constant head or pressure drop across the metering valve 108.

The pressurizing valve 112 is configured to maintain a minimum pressure magnitude in the supply line 118 downstream of the metering valve 108, and shuts when the pressure falls below this minimum pressure magnitude. To do so, the depicted pressurizing valve 112 includes a burn flow inlet port 111, a return pressure sense port 113, a pump inlet pressure port 115, and a burn flow outlet port 119. The pressurizing valve 112 is configured to open, and thus place the burn flow inlet port 111 in fluid communication with the burn flow outlet port 119, when the fuel pressure between the burn flow inlet port 111 and pump inlet pressure port 115 is at or above a predetermined differential pressure magnitude. The pressurizing valve 112 is configured to close, and thus fluidly isolate the burn flow inlet port 111 from the burn flow outlet port 119, when that pressure differential drops below a predetermined magnitude.

Before describing the fuel flow directing system 110, it is noted that the depicted combustor 150 includes a plurality of fuel manifolds 152. It will be appreciated that the number of fuel manifolds 152 may vary, but in the depicted embodiment, the combustor 150 includes at least two fuel manifolds, a start nozzle manifold 152-1 and a run nozzle manifold 152-2. In some embodiments, such as depicted in FIG. 1, the fuel flow directing system may optionally include a third, staged nozzle manifold 152-3. As will be appreciated, fuel nozzles are coupled to each of the fuel manifolds 152. In particular, a plurality of start nozzles 154 (154-1, 154-2, 154-3, ... 154-N) are coupled to the start nozzle manifold 152-1 and a plurality of run nozzles 156 (156-1, 156-2, 156-3, ... 156-N) are coupled to the run nozzle manifold 152-2. In embodiments where the staged nozzle manifold is included, a plurality of staged nozzles 158 (158-1, 158-2, 158-3, ... 158-N) are coupled to the staged nozzle manifold 152-3. It will be appreciated that the number and configuration of each of the start, run, and optionally staged nozzles 154, 156, 158 may vary. Each of the nozzles 154, 156, and optionally 158 are provided as single-circuit nozzles to reduce the total cost of production of the engine.

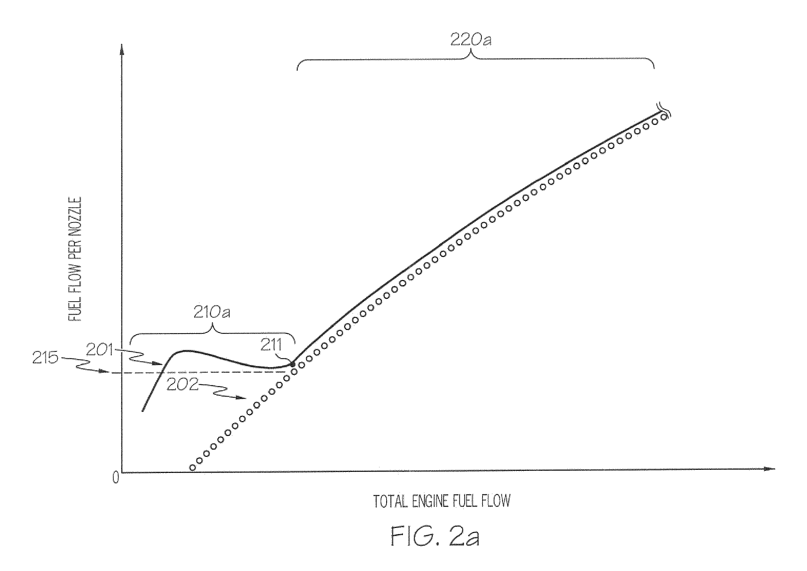

The depicted fuel flow directing system 110 is coupled to receive fuel from the pressurizing valve 112, and selectively deliver the fuel to the start nozzle manifold 152-1, the run nozzle manifold 152-2, and, where included, the staged nozzle manifold 152-3. With reference now to FIG. 2a, an exemplary chart depicting fuel flow per nozzle as a function of total engine fuel flow is provided. The fuel flow to each start nozzle 201 is depicted as a solid line and the fuel flow to each run nozzle 202 is depicted as a "-ooo-" line. There are no staged nozzles provided in this example. As shown at segment 210a of FIG. 2a, during start-up procedures, the fuel flow directing system 110 is configured to supply a preferential amount of fuel to the start nozzle manifold 152-1 such each start nozzle receives fuel at a sufficient flow rate for ignition to occur (minimum or threshold fuel flow level for ignition is indicated by dashed line 215). The fuel flow directing system 110 is configured such that as the total fuel flow to the combustor increases, the fuel flow to each start nozzle 201 initially increases above the threshold level 215, and then maintains a preferential fuel flow at or above the threshold level 215 throughout the start-up procedure through the range of total flow rates indicated by segment 210a.

Any fuel flow in excess of the preferential flow rate of fuel flow to the start nozzles 201, i.e., the remainder, is directed to the run nozzle manifold 152-2. As such, as further shown at segment 210a of FIG. 2a, fuel flow to the run nozzles 202 steadily increases as the flow rate to the start nozzles 201 remains preferentially provided above threshold level 215 through the range of total flow rates indicated by segment 210a. Light-around of the run nozzles 156 begins as the fuel flow to the run nozzles 202 reaches the threshold level 215. At a point 211 at or above the threshold level 215, at the upper range of segment 210a, the fuel flows 201 and 202 reach the same flow rate, equalizing the flows.

The range of total flow rates indicated by segment 220a of FIG. 2a depicts an area of increasing flow to all nozzles 201 and 202 after the flow rates have been equalized. In particular, segment 220a of FIG. 2a depicts the engine increasing the overall flow rate of fuel to the combustor. The flows to each nozzle 201 and 202 are equal, and continue to increase in tandem until a maximum fuel flow rate is achieved coinciding with maximum engine thrust.

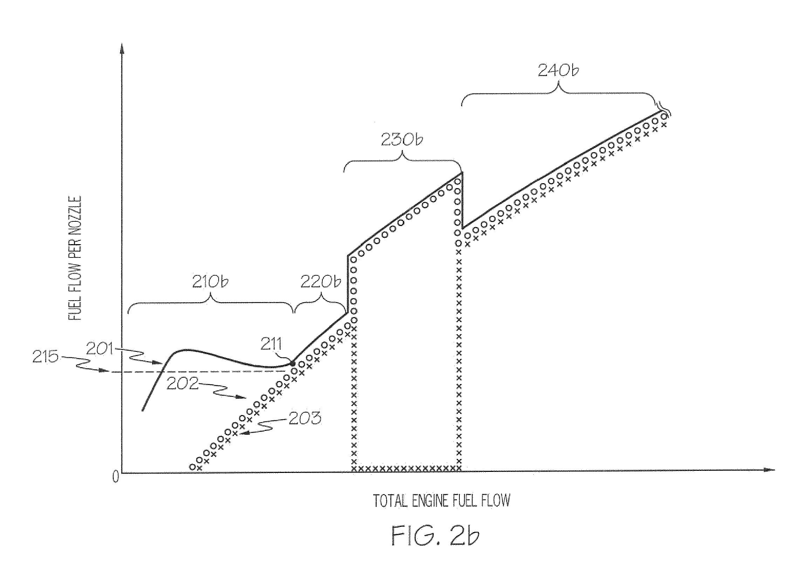

With reference now to FIG. 2b, another exemplary chart depicting fuel flow per nozzle as a function of total engine fuel flow is provided. The fuel flow to each start nozzle 201 is depicted as a solid line, the fuel flow to each run nozzle 202 is depicted as a "-ooo-" line, and in this example, staged nozzles are included, the fuel flow to each staged nozzle 203 being depicted as a "-xxx-" line. As shown at segment 210b of FIG. 2b, during start-up procedures, the fuel flow directing system 110 is configured to supply a preferential amount of fuel to the start nozzle manifold 152-1 such each start nozzle receives fuel at a sufficient flow rate for ignition to occur (minimum or threshold fuel flow level for ignition is indicated by dashed line 215). The fuel flow directing system 110 is configured such that as the total fuel flow to the combustor increases, the fuel flow to each start nozzle 201 initially increases above the threshold level 215, and then maintains a preferential fuel flow at or above the threshold level 215 throughout the start-up procedure through the range of total flow rates indicated by segment 210b.

Any fuel flow in excess of the preferential flow rate of fuel flow to the start nozzles 201, i.e., the remainder, is directed to the run nozzle manifold 152-2 and the staged nozzle manifold 152-3. As such, as further shown at segment 210b of FIG. 2b, fuel flow to the run nozzles 202 and fuel flow to the staged nozzles 203 steadily increases as the flow rate to the start nozzles 201 remains preferentially provided through the range of total flow rates indicated by segment 210b. Light-around of the run nozzles 156 and the staged nozzles 158 begins as the fuel flow to the run nozzles 202 and to the staged nozzles 203 reaches the threshold level 215. At a point 211 at or above the threshold level 215, at the upper end of segment 210b, the fuel flows 201, 202, and 203 reach the same flow rate, equalizing the flows.

The range of total flow rates indicated by segment 220b of FIG. 2b depicts an area of increasing flow to all nozzles 201, 202, 203 after the flow rates have been equalized. In particular, segment 220b of FIG. 2b depicts the engine increasing the overall flow rate of fuel to the combustor to reach a flow rate that is suitable for idling conditions.

At a first pre-determined total fuel flow rate that is above the flow equalization point 211, flow to the staged nozzles 203 may be discontinued to reduce emissions during idling conditions. Segment 230b of FIG. 2b depicts a range of idling total fuel flow rates where it is desirable to discontinue flow to the staged nozzles 203, as indicated by the cessation of fuel flow to the staged nozzle manifold 152-3, and the simultaneous increase of fuel flow to the start nozzle manifold 152-1 and to the run nozzle manifold 152-2. In the range of total fuel flow depicted by segment 230, as total fuel flow increases, only fuel flow to the start nozzles 201 and to the run nozzles 202 increases, while fuel does not flow to the staged nozzles 203. Once the total fuel flow rate has increased through the range indicated by segment 230b to a second pre-determined flow rate, fuel flow to the staged nozzle manifold 152-3 is resumed, resulting in an increase in fuel flow to the staged nozzle manifold 152-3, and a simultaneous decrease of fuel flow to the start nozzle manifold 152-1 and to the run nozzle manifold 152-2.

As the total fuel flow rate increases above idling conditions, the flows to each nozzle 201, 202, and 203 are again equalized, and continue to increase in tandem until a maximum fuel flow rate is achieved coinciding with maximum engine thrust. This range of increasing fuel flow rates during normal engine operations is indicated by segment 240b of FIG. 2b.

The fuel flow directing system 110 may be variously configured to implement the fuel flow directing functions described above. Generally speaking, any system configured to selectively direct fuel flow into one or more of the manifolds 152-1, 152-2, 152-3 will be suitable for use in embodiments of the present disclosure. Various types of electrical, mechanical, electromechanical, hydraulic, or pneumatic actuators can be provided alone or in combination to perform the above-described fuel flow directing functions. The design and implementation of the various physical components that may be used to achieve the above-described flow directing functions is considered to be well within the level of skill of a person having ordinary skill in the art, and as such this disclosure is not limited to any particular physical implementation.

In one exemplary embodiment, the fuel flow directing system 110 may be pressure based. For example, fuel could be initially directed to the start nozzles 201 until a pre-determined fuel pressure is reached, after which point an actuator/valve could direct additional fuel flow to the run nozzles 202 and optionally to the staged nozzles 203. The actuator/valve could be resiliently biased such that pressures above the pre-determined pressure cause the actuator to direct flow accordingly. In embodiments where staged nozzles are included, the discontinuation/resumption of fuel flow to the staged nozzles 203 during idling conditions (segment 230b) could be accomplished similarly using pressure based-actuators/valves, or using an electronically actuated solenoid or other similar means. In a particular example, the fuel flow directing system 110 may be provided as a flow divider system as is disclosed in commonly assigned United States Patent Application Serial No. 13/085,107, filed April 12, 2011, and titled "FUEL FLOW DIVIDER AND ECOLOGY SYSTEM FOR A GAS TURBINE ENGINE FUEL FLOW CONTROL SYSTEM," the contents of which are hereby incorporated by reference in their entirety.

In another exemplary embodiment, the fuel flow directing system 110 may measure fuel flow rates directly, and then actuate electromechanical actuators upon the detection of one or more of the pre-determined fuel flow rates. For example, the system 110 could direct all fuel flow into the start nozzles 201 for start-up until a flow sensor senses that a desired flow rate (i.e., a rate above threshold 215) has been reached. Thereafter, an actuator could direct any additional fuel flow to the run nozzles 202 and optionally to the staged nozzles 203 until an equal flow rate is sensed at all nozzles. Thereafter, an actuator could direct additional fuel flow to all the nozzles to maintain flow equalization as total fuel flow increases. The discontinuation/resumption of fuel flow to the staged nozzles 203, where provided, during idling conditions (segment 230b) could be accomplished using an electronically actuated solenoid or other similar means.

In some embodiments, a pressure relief valve or other similar component may be provided to allow fuel flow to resume in the optionally provided staged nozzles in the event of a malfunction in the actuator that selectively directs flow to the staged nozzles, e.g. the solenoid or other similar component. Thus, if a malfunction occurred and flow to the staged nozzles was not resume once the second pre-determined fuel flow rate was reached, the pressure relief valve would allow flow to resume to the staged nozzles to prevent unbalanced combustion and/or heat distribution in the combustor.

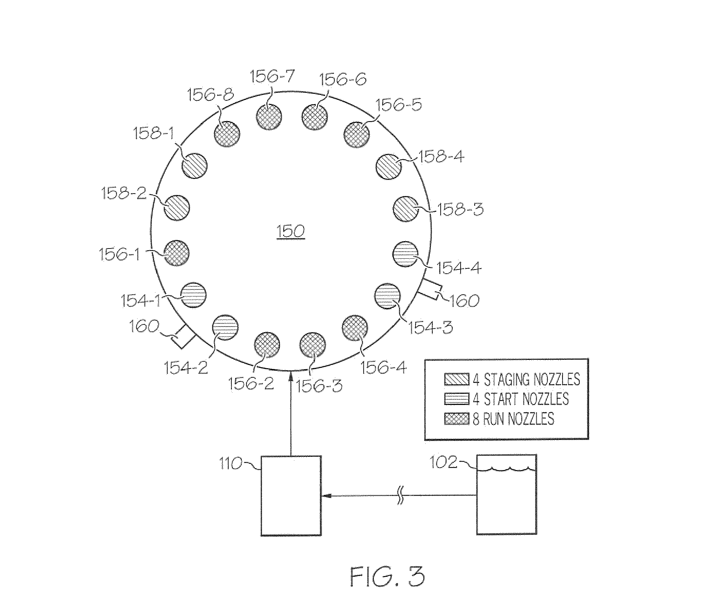

The presently disclosed fuel directing system 110 allows the combustor to be designed entirely with single-circuit nozzles, reducing the overall production cost of the engine. Hot-streaking is substantially prevented by maintaining flow to the start nozzles at a level at or above the ignition threshold level while gradually increasing the fuel flow to the run and optional staged nozzles for light-around. Further, emissions are reduced as flow to the staged nozzles is discontinued during idling operations. FIG. 3 depicts an exemplary combustor 150 configuration with 16 single-circuit nozzles. As will be appreciated, more of fewer nozzles may be provided in a particular implementation. Four single-circuit start nozzles 154-1, 154-2, 154-3, and 154-4 are provided near the lower end of the combustor 150 in groupings of two. An igniter 160 is provided between each grouping to initial combustion once sufficient fuel flow is provided to the nozzles 154. Eight single-circuit nozzles 156-1 through 156-8 are run nozzles. In this embodiment, four single-circuit staged nozzles 158-1, 18-2, 158-3, and 158-4 have optionally been provided near the upper end of the combustor 150, also in groupings of two.

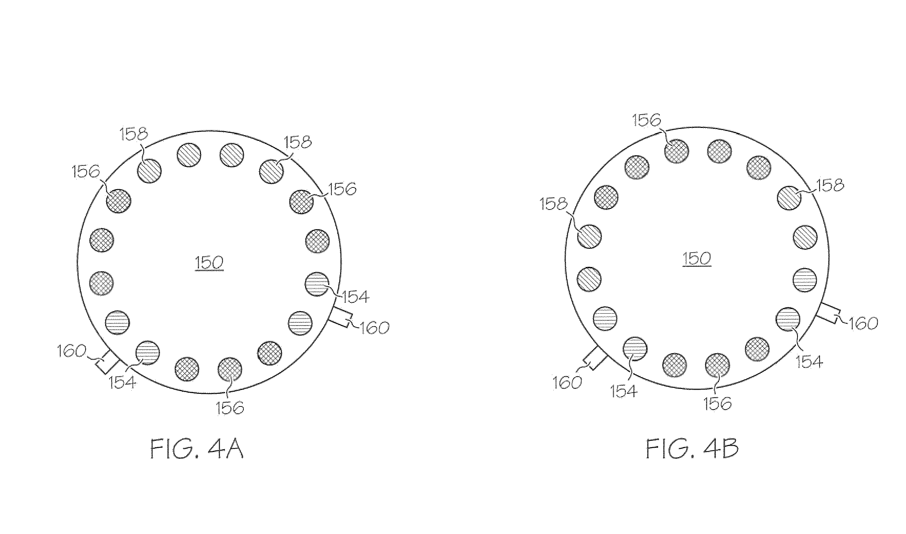

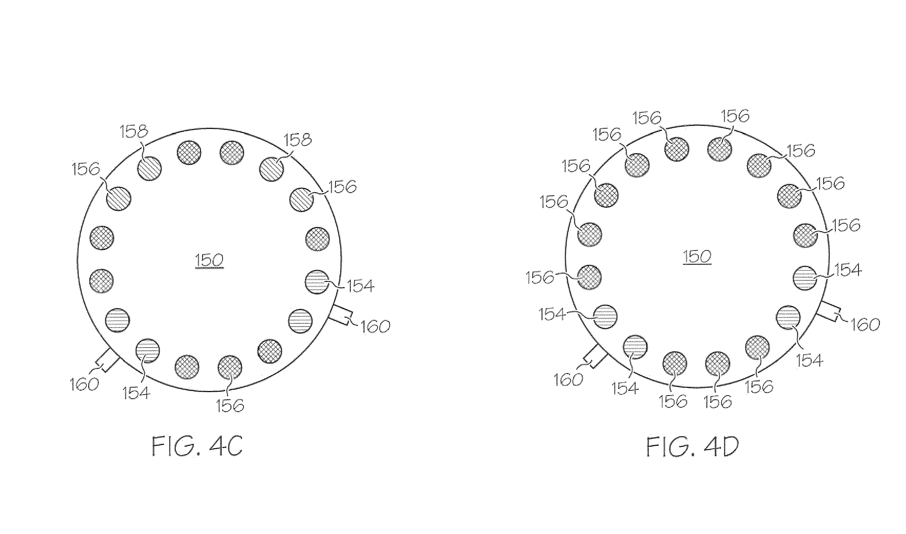

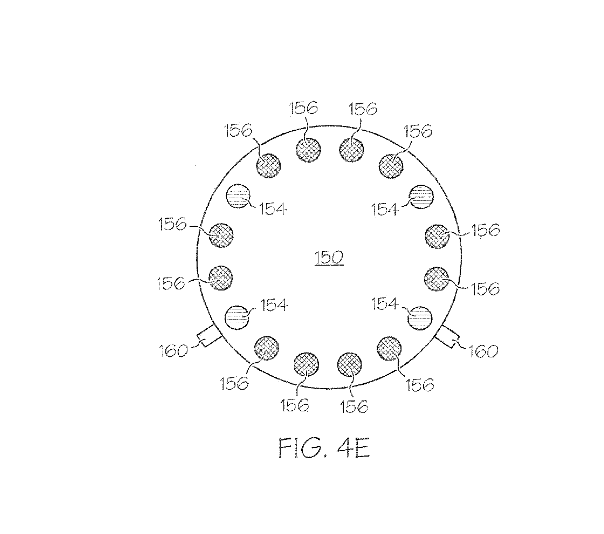

As will be appreciated, alternative configurations of start, run, and optionally staged nozzles, with alternate numbers of total nozzles, are possible. In particular, FIGS. 4A, 4B, 4C, 4D, and 4E depict five such alternate configurations. FIGs. 4A through 4C depict embodiments that optionally include staged nozzles (for example, four start nozzles, four staged nozzles, and eight run nozzles), whereas FIGs. 4D and 4E depict embodiments that do not include any staged nozzles (for example, four start nozzles and twelve run nozzles). It is noted that, in some embodiments, it has been found to be desirable to provide the start nozzles 154 near the bottom of the combustor 150 and near the igniter(s) to ensure proper light-around, and the staged nozzles 158 near the mid-region or near the top of the combustor 150 to prevent fuel dripping. In other embodiments, as in FIG. 4E, start nozzles 154 may be provided near the top of the combustor 150 as well.

In still a further embodiment, the fuel flow control system 100 may include an ecology function, in the form of, for example, an ecology valve. The ecology valve is configured to selectively extract fuel from the fuel manifolds 152 during engine shutdown. The ecology valve is additionally configured, during and after engine startup, to return the extracted fuel to the fuel manifolds 152. As such, fuel is substantially prevented from being wasted during shut-down procedures. An exemplary ecology valve suitable for use with the systems and methods of the present disclosure is described in the previously-referenced Application Serial No. 13/085,107.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A combustion system for a gas turbine engine, comprising:
a combustor;
a plurality of fuel injector nozzles within the combustor, wherein the plurality of fuel injector nozzles comprise at least one start nozzle and at least of run nozzle, wherein each of the plurality of fuel injector nozzles is a single-circuit fuel injector nozzle; and
a fuel flow directing system to selectively deliver fuel flow to each of the at least one start nozzle and at least one run nozzle, wherein the fuel flow directing system is configured to deliver preferential flow of fuel to the at least one start nozzle during an engine start-up procedure and is further configured to deliver an equalized flow both of the at least one start nozzle and the at least one run nozzle as a total engine fuel flow is near or above an idle setting.

2. The combustion system of claim 1, wherein the at least one start nozzle is located near an igniter.

3. The combustion system of claim 1, comprising four start nozzles and twelve run nozzles.

4. The combustion system of claim 1, wherein the preferential flow of fuel is at or above a level sufficient for fuel ignition.

5. The combustion system of claim 1, wherein the fuel flow directing system is configured to deliver an increasing flow of fuel to each of the at least one run nozzle as the total engine fuel flow is increased to the combustor.

6. The combustion system of claim 1, wherein the fuel flow directing system is configured to detect a rate of fuel flow within the combustor.

7. The combustion system of claim 1, wherein the fuel flow directing system is configured to detect a pressure associated with fuel flow within the combustor.
